# EUROPÄISCHE PATENTSCHRIFT

(11) **EP 2 647 106 B1**
(45) Veröffentlichungstag und Bekanntmachung des Hinweises auf die Patenterteilung: **09.01.2019**
(21) Anmeldenummer: 11790772.5
(22) Anmeldetag: 29.11.2011
(51) Int. Cl.: H02K 9/19

(54) **FLÜSSIGKEITSFÖRDEREINRICHTUNG**
LIQUID DELIVERY DEVICE
DISPOSITIF DE TRANSPORT DE LIQUIDE

(30) Priorität: 29.11.2010 DE 102010062137
(43) Veröffentlichungstag der Anmeldung: 09.10.2013
(73) Patentinhaber: Mahle International GmbH, 70376 Stuttgart (DE)
(72) Erfinder: BEEZ, Günther, 98666 Masserberg (DE); BEEZ, Steve, 98666 Masserberg (DE); HELMIS, Martin, 73733 Esslingen (DE); KRAPPEL, Michael, 70372 Stuttgart (DE); MAEDER, André, 98646 Hildburghausen (DE)
(74) Vertreter: BRP Renaud & Partner mbB Rechtsanwälte Patentanwälte Steuerberater
(86) Internationale Anmeldenummer: PCT/EP2011/071236
(87) Internationale Veröffentlichungsnummer: WO 2012/072609

(56) Entgegenhaltungen:
- DE-A1- 10 052 797
- US-A- 2 669 667
- US-A- 3 475 631

## Beschreibung

Die vorliegende Erfindung betrifft eine Flüssigkeitsfördereinrichtung, insbesondere eine Ölfördereinrichtung, für ein Fahrzeug, insbesondere für eine Brennkraftmaschine, mit den Merkmalen des Oberbegriffs des Anspruchs 1.

Mit einer Flüssigkeitsfördereinrichtung lassen sich grundsätzlich beliebige Flüssigkeiten, also Hydraulikmittel, fördern. Im besonderen Fokus sind im vorliegenden Zusammenhang Flüssigkeiten, die von Wasser verschieden sind und insbesondere einen höheren Siedepunkt als Wasser besitzen, wie z.B. Öle oder flüssige Wärmeträgermedien.

Bei Brennkraftmaschinen, insbesondere bei Fahrzeuganwendungen, gibt es Ölkreise, beispielsweise zur Schmierölversorgung der Brennkraftmaschine oder eines Getriebes. Ebenso sind andere Ölkreise denkbar, beispielsweise zur Versorgung einer Hydraulik oder zum Kühlen oder Erwärmen von Fahrzeugkomponenten. Im jeweiligen Ölkreis befindet sich zumindest eine Ölfördereinrichtung zum Antreiben des Öls bzw. des jeweiligen Hydraulikmittels.

Auch bei anderen Fahrzeuganwendungen können Fluidkreise zum Einsatz kommen, z.B. zum Temperieren von Batterien bei einem Elektroantrieb eines Elektrofahrzeugs oder eines Hybridfahrzeugs.

Je nach Anwendung kann das Öl im jeweiligen Ölkreis eine vergleichsweise hohe Betriebstemperatur erreichen, die deutlich über 100°C, insbesondere auch über 200°C oder über 250°C, liegen kann. Derartige hohe Temperaturen sind für Ölfördereinrichtungen problematisch, wenn zum Abdichten stationärer Teile gegenüber rotierenden Teilen Kunststoffdichtungen, insbesondere Elastomerdichtungen, verwendet werden, die bevorzugt als Berührungsdichtungen ausgestaltet sind, und /oder wenn zum Antreiben einer Pumpe ein Elektromotor verwendet wird, der im Betrieb selbst Wärme erzeugt.

Aus der US 3 475 631 ist eine Flüssigkeitsfördereinrichtung bekannt, die mit einer Pumpe zum Fördern eines Hydraulikmediums und mit einem Elektromotor zum Antreiben der Pumpe ausgestattet ist. Dabei ist ein Rotor des Elektromotors in einem Rotorraum drehbar gelagert, der von einem Kühlmittel durchströmbar ist. Der Rotorraum ist dabei durch ein Spaltrohr von einem Stator des Elektromotors fluidisch dicht getrennt. Ferner weist ein Motorgehäuse einen Kühlmitteleinlass und einen Kühlmittelauslass auf, wobei ein mit dem Kühlmitteleinlass und dem Kühlmittelauslass fluidisch verbundener Innenraum des Motorgehäuses mit dem Motorraum fluidisch verbunden ist.

Bei einer gattungsgemäßen Flüssigkeitsfördereinrichtung, die aus der DE 10052 797 A1 bekannt ist, ist im Unterschied zu der der vorstehend beschriebenen Flüssigkeitsfördereinrichtung vorgesehen, dass eine Leistungselektronik zur Versorgung des Stators mit elektrischer Energie so angeordnet ist, dass mit dem Kühlmittel Wärme von der Leistungselektronik abführbar ist.

Eine weitere Fördereinrichtung ist aus der US 2 669 667 bekannt.

Die vorliegende Erfindung beschäftigt sich mit dem Problem, für eine Fördereinrichtung der eingangs genannten Art eine verbesserte Ausführungsform anzugeben, die sich insbesondere für eine Hochtemperaturanwendung eignet bzw. die eine ausreichende Dichtung auch bei höheren Betriebstemperaturen des zu fördernden Hydraulikmediums gewährleistet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen Rotor eines Elektromotors, der zum Antreiben einer Pumpe zum Fördern des Hydraulikmediums vorgesehen ist, in einem Rotorraum drehbar zu lagern, der von einem Kühlmittel durchströmbar ist. Durch diese Maßnahme kann der Rotor des Elektromotors gekühlt werden, wodurch gleichzeitig auch eine Dichtung zwischen Rotor und Stator thermisch entlastet werden kann. Zweckmäßig treibt der Rotor nämlich eine Abtriebswelle des Elektromotors an oder umfasst diese Abtriebswelle, wobei die Abtriebswelle mit der Pumpe antriebsverbunden ist. Beispielsweise kann die Pumpe eine Antriebswelle aufweisen, um ein Pumpenglied, zum Beispiel ein Flügelrad oder ein Pumpenrad oder dergleichen, anzutreiben. Ebenso können Abtriebswelle und Antriebswelle integral durch eine gemeinsame Welle gebildet sein. Jedenfalls muss die Abtriebswelle des Elektromotors aus dem Rotorraum herausgeführt werden, um die Pumpe antreiben zu können. Bei gekühltem Rotor erfolgen auch eine Kühlung der Abtriebswelle sowie eine Kühlung der Dichtung, welche die Abtriebswelle gegenüber dem Rotorraum dichtet. Dies ist insbesondere dann von Vorteil, wenn ein Gehäuse des Elektromotors und ein Gehäuse der Pumpe unmittelbar aneinander grenzen, unmittelbar aneinander befestigt sind oder integral durch ein einheitliches Gehäuse gebildet sind.

Der Rotorraum ist zweckmäßig mit einem Kühlmitteleinlass sowie mit einem Kühlmittelauslass fluidisch verbunden, damit er vom Kühlmittel durchströmbar ist. Ferner ist dadurch eine externe Versorgung mit Kühlmittel realisierbar. Hierdurch ist es grundsätzlich möglich, das extern zugeführte Kühlmittel hinsichtlich der zugeführten Kühlmittelmenge und/oder der Kühlmitteltemperatur zu beeinflussen bzw. zu steuern bzw. zu regeln. Auch kann dadurch eine von dem mit der Pumpe geförderten Hydraulikmedium unterschiedliche Flüssigkeit als Kühlmittel verwendet werden. Beispielsweise kann der Antriebsmotor mit Wasser gekühlt werden, während die Pumpe Öl fördert.

Besonders zweckmäßig ist dann eine Ausführungsform, bei der das Kühlmittel vom Hydraulikmedium fluidisch getrennt ist bzw. bei der das Kühlmittel und das Hydraulikmedium verschiedene Flüssigkeiten sind.

Alternativ ist jedoch ebenso eine Ausführungsform möglich, bei der ein durch die Pumpe geführter Hydraulikpfad stromab der Pumpe eine Entnahmestelle für einen Teilstrom des Hydraulikmediums aufweist, der als Kühlmittel für den Elektromotor verwendet wird, wobei zwischen der Entnahmestelle und dem Kühlmitteleinlass insbesondere eine Wärmesenke angeordnet sein kann. Hierdurch wird zum Kühlen zwar das Hydraulikmedium verwendet, das von der Pumpe gefördert wird, jedoch wird dieser als Kühlmittel dienende Teilstrom des Hydraulikmittels nicht intern, z.B. über gezielte Leckagen, sondern extern zugeführt, wodurch eine genauere Mengensteuerung möglich ist. Insbesondere wird dadurch auch eine Zwischenkühlung des Teilstroms des Hydraulikmittels ermöglicht, bevor es als Kühlmittel in den Rotorraum eintritt.

Besonders vorteilhaft ist eine Ausführungsform, bei welcher der Rotorraum durch ein Spaltrohr von einem Stator des Elektromotors fluidisch dicht getrennt ist. Auf diese Weise ist der Stator vom Kühlmittel entkoppelt, so dass die im Stator untergebrachte Elektronik geschützt ist. Das Spaltrohr erstreckt sich in einem Ringspalt zwischen Rotor und Stator, in dem die elektromagnetischen Kräfte zwischen Stator und Rotor übertragen werden. Der Elektromotor ist hierzu zweckmäßig als bürstenloser Elektromotor konzipiert, so dass er ohne körperlichen Kontakt zwischen Rotor und Stator auskommt, abgesehen von einer Drehlagerung des Rotors am Stator.

Bei einer vorteilhaften Ausführungsform ist das Spaltrohr im Bereich des Rotors hohl ausgestaltet und vom Kühlmittel durchströmbar. Beispielsweise ist das Spaltrohr hierzu doppelwandig konfiguriert, wobei zwei hohlzylindrische Wände koaxial zueinander angeordnet sind. Die Innenwand begrenzt den Rotorraum gegenüber dem Rotor, während die Außenwand den Rotorraum gegenüber dem Stator begrenzt. Bei dieser Bauform ist der Rotor als Trockenläufer ausgestaltet, da er zumindest im Bereich der elektromagnetischen Kraftübertragung keinen Kontakt zum Kühlmittel aufweist. Die Abtriebswelle kann dabei vom Kühlmittel umspült sein oder durch ein Abtriebswellenrohr trocken hindurchgeführt sein.

Bei einer alternativen Ausführungsform kann der Rotor als Nassläufer ausgestaltet sein. In diesem Fall ist der Rotor, zumindest in dem Bereich, in dem die elektromagnetische Kraftübertragung stattfindet, vom Kühlmittel umspült. Zweckmäßig ist dann auch die Abtriebswelle vom Kühlmittel umspült. Alternativ kann die Abtriebswelle in einem Rohr trocken laufen.

Besonders vorteilhaft ist eine Ausführungsform, bei der das Spaltrohr an einer Stirnseite, die zweckmäßig an einem von der Pumpe abgewandten Ende angeordnet ist, mit einem Boden verschlossen ist, der ebenfalls hohl ausgestaltet und vom Kühlmittel durchströmbar ist. Auf diese Weise kann der Rotor auch stirnseitig gekühlt werden. Insbesondere kann eine Überhitzung des Stators dadurch effektiv vermieden werden.

Bei einer weiteren Ausführungsform kann das Motorgehäuse eine Wellendichtung aufweisen, durch die hindurch eine mit dem Rotor antriebsverbundene Abtriebswelle des Elektromotors aus dem Motorgehäuse herausgeführt ist. Sofern die Abtriebswelle als Bestandteil des Rotors aufgefasst wird, da sie immerhin ebenfalls mit dem Rotor rotiert, ist durch die Wellendichtung hindurch die Abtriebswelle des Rotors aus dem Motorgehäuse herausgeführt. Da der Innenraum des Motorgehäuses mit dem Rotorraum fluidisch verbunden ist, ergibt sich auch eine Kühlung des Motorgehäuses im Bereich der Wellendichtung.

Die Wellendichtung kann dabei konventionell als Berührungsdichtung oder alternativ als Labyrinthdichtung ausgestaltet sein oder eine Kombination von Berührungsdichtung und Labyrinthdichtung umfassen. Während eine Berührungsdichtung höhere Drücke abdichten kann, arbeitet eine Labyrinthdichtung nahezu verschleißfrei.

Besonders vorteilhaft ist nun eine Ausführungsform, bei welcher die Wellendichtung innenraumseitig vom Kühlmittel beaufschlagt ist. Hierdurch kann das Kühlmittel die Wellendichtung unmittelbar kühlen. Insbesondere kann dabei vorgesehen sein, dass das Motorgehäuse einen Dichtungsbereich aufweist, in dem die Wellendichtung angeordnet ist und der eine radiale und axiale Kühlung der Wellendichtung ermöglicht. Hierdurch kann die Wellendichtung intensiv gekühlt werden. Insbesondere kann die Wellendichtung dann aus bzw. mit Kunststoff hergestellt werden.

Zweckmäßig sind der Rotor bzw. die Abtriebswelle am Motorgehäuse drehbar gelagert.

Eine Abtriebswelle des Elektromotors ist entsprechend einer bevorzugten Ausführungsform mit einer Antriebswelle der Pumpe antriebsverbunden. Alternativ, können Abtriebswelle und Antriebswelle eine integrale Einheit bilden.

Entsprechend einer vorteilhaften Ausführungsform kann ein das Kühlmittel dem Elektromotor zuführender und das Kühlmittel vom Elektromotor abführender Kühlmittelpfad in einen Kühlkreis der Brennkraftmaschine eingebunden sein, der zum Kühlen eines Motorblocks der Brennkraftmaschine vorgesehen ist. Hierdurch kann eine intensive Kühlung von Rotor und Stator bzw. des Elektromotors realisiert werden, wobei der hierzu erforderliche Installationsaufwand vergleichsweise gering ist, da der Motorkreislauf üblicherweise ausreichend Kühlleistung zur Verfügung stellt.

Bei einer anderen Ausführungsform kann ein durch die Pumpe geführter Hydraulikpfad, insbesondere Ölpfad, stromab der Pumpe eine Entnahmestelle für einen Teilstrom des Hydraulikmediums aufweisen, der als Kühlmittel für den Elektromotor verwendet wird. Insbesondere kann dabei zwischen der Entnahmestelle und dem Kühlmitteleinlass eine Wärmesenke angeordnet werden, um den entnommenen Teilstrom stromauf des Rotorraums zu kühlen. Eine derartige Wärmesenke kann beispielsweise ein Wärmeübertrager sein, der an einen Kühlkreis, insbesondere an den Motorkühlkreis angeschlossen sein kann. Alternativ kann ein derartiger Wärmeübertrager auch mit der Umgebung bzw. mit einem Kühlluftstrom wärmeübertragend gekoppelt sein.

Der Kühlmittelauslass des Motorgehäuses kann beispielsweise zu einem Hydrauliktank, insbesondere zu einem Öltank, z.B. zu einer Ölwanne, oder zu einem sonstigen Reservoir führen. Alternativ kann der Kühlmittelauslass auch zu einer Einleitstelle des Hydraulikpfads geführt sein, die sich stromauf der Pumpe befindet.

Gemäß einer anderen vorteilhaften Ausführungsform kann die Pumpe außerhalb des Rotorraums und insbesondere auch außerhalb des Motorgehäuseinnenraums und/oder außerhalb des Motorgehäuses angeordnet sein. Hierdurch kann die thermische Trennung zwischen Pumpe und Elektromotor verbessert werden.

Erfindungsgemäß ist eine Leistungselektronik zur Versorgung des Stators mit elektrischer Energie vorgesehen und dabei so angeordnet bzw. ausgestaltet, dass mit dem Kühlmittel Wärme von der Leistungselektronik abführbar ist. Auf diese Weise kann eine intensive Kühlung der Elektronik realisiert werden, was zum einen den Wärmeeintrag in den Rotorraum reduziert und zum anderen die Lebensdauer der Elektronik verlängert.

Zur Realisierung einer solchen Kühlung der Elektronik ist erfindungsgemäß vorgesehen, dass eine Platine der Leistungselektronik, die auf einer ersten Seite elektrische Komponenten der Leistungselektronik trägt, so eingebaut bzw. angeordnet ist, dass sie an einer der ersten Seite gegenüberliegenden zweiten Seite direkt mit dem Kühlmittel beaufschlagt ist. Hierdurch kann Wärme direkt von der Platine abgeführt werden. Insbesondere kann hierzu die Platine aus einen Material mit erhöhter Wärmeleitfähigkeit hergestellt sein, z.B. aus einem Metall. Ebenso ist es erfindungsgemäß möglich, eine solche Platine der Leistungselektronik, die elektrische Komponenten der Leistungselektronik trägt, hohl auszugestalten und vom Kühlmittel durchströmen zu lassen. Auf diese Weise bildet bereits die Platine selbst einen Kühlkanal, der an einen Kühlmittelpfad angeschlossen werden kann.

Ferner kann bei einer anderen Ausführungsform zusätzlich oder alternativ vorgesehen sein, dass der Stator wenigstens einen Kühlkanal aufweist, durch den das Kühlmittel strömt. Während die Durchströmung des Rotorraums mit Kühlmittel für eine Kühlung des Antriebsmotors rotorseitig, also von innen sorgt, führt die Integration eines oder mehrerer Kühlkanäle in den Stator zu einer Kühlung des Antriebsmotors statorseitig, also von außen, so dass nunmehr in beide Richtungen, also nach innen und nach außen Wärme abführbar ist.

Derartige Kühlkanäle lassen sich im oder am Stator auf unterschiedliche Weise realisieren. Die nachfolgend aufgezählten Möglichkeiten sind rein exemplarisch und keinesfalls abschließend zu verstehen. Ferner sind die genannten Möglichkeiten unabhängig voneinander sowie in beliebiger Kombination realisierbar. Zum Beispiel kann der Stator aus einer Vielzahl, vorzugsweise in der Axialrichtung des Rotors, aufeinandergestapelter Statorbleche aufgebaut sein, in denen wenigstens ein solcher Kühlkanal ausgebildet ist. Ferner kann der Stator wenigstens eine Statorwicklung aufweisen, in die wenigstens ein Rohr zur Ausbildung eines solchen Kühlkanals eingebunden ist. Außerdem kann der Stator zum Rotorraum hin wenigstens eine elektrische Isolierung aufweisen, wobei in der Isolierung wenigstens ein Rohr zur Ausbildung eines solchen Kühlkanals angeordnet ist.

Die vorstehend beschriebene Kühlung des Stators bzw. der Elektronik kann vorzugsweise gemeinsam mit der Kühlung des Rotors realisiert werden. Denkbar ist jedoch auch eine Ausführungsform, bei welcher die verschiedenen Kühlaufgaben durch verschiedene Kühlkreise und/oder verschiedene Kühlmittel realisiert werden. Beispielsweise lässt sich der Rotorbereich durch einen Teilstrom des mit der Pumpe geförderten Hydraulikmittels kühlen, währen der Statorbereich bzw. die Elektronik mit einem dazu unterschiedlichen bzw. davon getrennten Kühlmittel gekühlt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Figur 1: eine stark vereinfachte, schaltplanartige Prinzipdarstellung einer Brennkraftmaschine mit einem Hydraulikkreis,
- Figur 2: ein stark vereinfachter Längsschnitt eines Elektromotors,
- Figur 3: ein stark vereinfachter Querschnitt des Elektromotors.

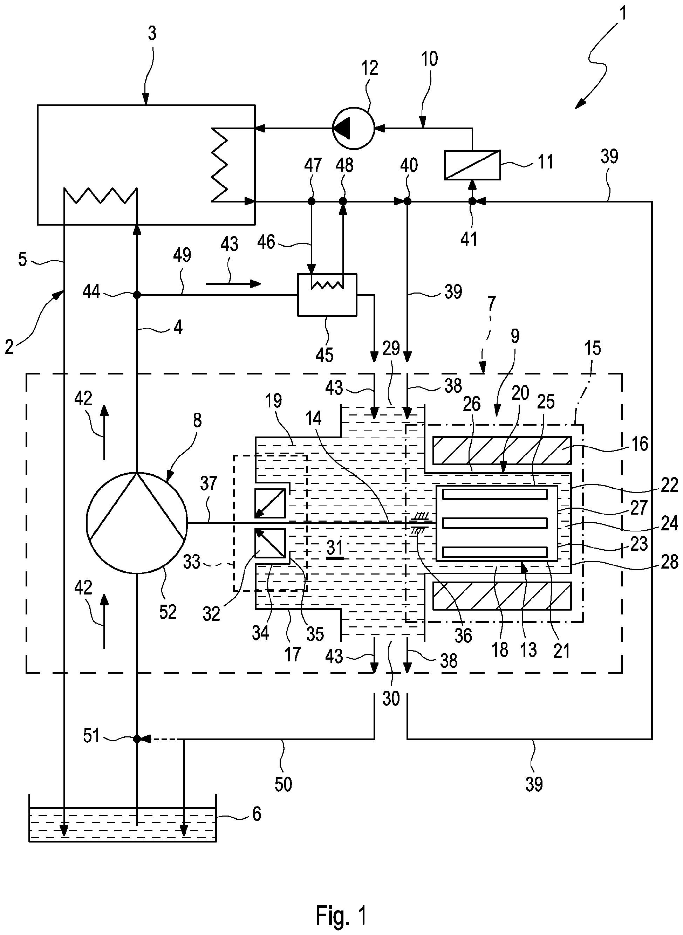

Entsprechend Figur 1 umfasst eine Brennkraftmaschine 1, die stationär oder in einem Kraftfahrzeug angeordnet sein kann, zumindest einen Hydraulikkreis 2, mit dem ein Hydraulikmittel einem Hydraulikverbraucher zugeführt werden kann. Der Hydraulikkreis 2 kann auch ohne eine derartige Brennkraftmaschine 1 zur Anwendung kommen. Die Verwendung des Hydraulikkreises 2 in Verbindung mit einer solchen Brennkraftmaschine 1 ist aber von erhöhtem Interesse, da dort preiswerte Lösungen angestrebt sind. Der Hydraulikkreis 2 kann dabei zum Kühlen oder Erwärmen oder allgemein zum thermischen Konditionieren und/oder zum Schmieren einer beliebigen Komponente z.B. der Brennkraftmaschine 1 oder eines Kraftfahrzeugs verwendet werden. Beispielsweise kann in einem Elektrofahrzeug (ohne Brennkraftmaschine 1) oder in einem Hybridfahrzeug (mit oder ohne Brennkraftmaschine 1) der Hydraulikkreis 2 zum thermischen Konditionieren einer Batterie, insbesondere einer Hochtemperaturbatterie, verwendet werden.

Bevorzugt handelt es sich beim Hydraulikmittel um ein Öl, so dass der Hydraulikkreis 2 im Folgenden auch als Ölkreis 2 bezeichnet werden kann. Dieser Ölkreis 2 dient insbesondere zur Ölversorgung eines Motorblocks 3 der Brennkraftmaschine 1. Der Ölkreis 2 umfasst dabei einen zum Motorblock 3 bzw. zu nicht näher dargestellten Schmierstellen führenden Vorlauf 4 sowie einen Rücklauf 5, der beispielsweise zu einem Ölreservoir 6 führt, beispielsweise eine Ölwanne, die üblicherweise unten am Motorblock 3 angeordnet ist. Im Ölkreis 2 kann ein Hydraulikkühler bzw. Ölkühler angeordnet sein, der hier jedoch nicht dargestellt ist. Zum Antreiben des Öls ist eine Flüssigkeitsfördereinrichtung 7 vorgesehen, die im Folgenden auch als Ölfördereinrichtung 7 bezeichnet wird. Eine Systemgrenze dieser Ölfördereinrichtung 7 ist in Figur 1 durch einen mit unterbrochener Linie dargestellten Rahmen angedeutet. Die Ölfördereinrichtung 7 umfasst eine Pumpe 8 zum Fördern des Öls sowie einen Elektromotor 9 zum Antreiben der Pumpe 8. Eine Systemgrenze 15 des Elektromotors 9 ist in Figur 1 durch einen mit strichpunktierter Linie angedeuteten Rahmen symbolisiert.

Die Brennkraftmaschine 1 ist außerdem mit einem Kühlkreis 10 ausgestattet, der einen Kühler 11 und eine Kühlmittelpumpe 12 umfasst und der auf geeignete Weise wärmeübertragend mit dem Motorblock 3 gekoppelt ist.

Der Elektromotor 9 weist einen Rotor 13 auf, der zum Antreiben einer Abtriebswelle 14 des Elektromotors 9 dient, wobei insbesondere vorgesehen sein kann, dass die Abtriebswelle 14 einen integralen Bestandteil des Rotors 13 bildet. Jedenfalls ist der Rotor 13 drehfest mit der Abtriebswelle 14 verbunden. Als Rotor 13 wird im Folgenden nur der innerhalb der Systemgrenze 15 liegende Abschnitt des Rotors 13 aufgefasst, in dem die elektromagnetische Wechselwirkung zwischen dem Rotor 13 und einem Stator 16 des Elektromotors 9 stattfindet. Insoweit weicht die Systemgrenze 15, die den physikalischen Elektromotor, also Stator 16 und Rotor 13 definiert, von einer physischen oder körperlichen Grenze des Elektromotors 9 ab, der zumindest einen Teil der Abtriebswelle 14 umfasst. Insbesondere weist der Elektromotor 9 ein Motorgehäuse 17 auf, das sich zumindest teilweise außerhalb der physikalischen Systemgrenze 5 des Elektromotors 9 befindet.

Jedenfalls ist der Rotor 13 in einem Rotorraum 18 angeordnet, der von einem Kühlmittel 19 durchströmbar ist. Der Rotorraum 18 ist hier durch ein Spaltrohr 20 vom Stator 16 fluidisch dicht getrennt. Bei der hier gezeigten Ausführungsform ist der Rotor 13 als Nassläufer ausgestaltet, bei dem eine Außenseite 21 des Rotors 13 unmittelbar dem Kühlmittel 19 ausgesetzt, damit in Kontakt steht und vom Kühlmittel 19 umspült ist. Das Spaltrohr 20 ist in diesem Fall außerdem so dimensioniert, dass ein stirnseitiger, axialer Boden 22 des Spaltrohrs 20 von einer axialen Stirnseite 23 des Rotors 13 axial beabstandet ist, so dass auch ein axialer Hohlraum oder Zwischenraum 24 zwischen den beiden Stirnseiten 22, 23 vom Kühlmittel 19 durchströmbar ist.

Der Elektromotor 9 ist somit zweckmäßig als Spaltrohrmotor bzw. als bürstenloser Elektromotor konzipiert.

Bei einer alternativen Ausführungsform, bei welcher der Rotor 13 als Trockenläufer konzipiert ist, kann das Spaltrohr 20 im Bereich des Rotors 13 hohl bzw. doppelwandig ausgestaltet sein und vom Kühlmittel 19 durchströmbar sein. Beispielsweise umfasst das Spaltrohr 20 dann eine zylindrische Innenwand 25, die den Rotorraum 18 gegenüber dem Rotor 13 dicht verschließt, und eine zylindrische Außenwand 26, die den Rotorraum 18 gegenüber dem Stator 16 dicht verschließt. Stirnseitig ist dann zweckmäßig der Boden 22 ebenfalls hohl bzw. doppelwandig ausgestaltet. Insbesondere umfasst der Boden 22 dann einen Innenboden 27, der den Rotorraum 18 gegenüber dem Rotor 13 dicht verschließt, und einen Außenboden 28, der den Rotorraum 18 gegenüber dem Stator 16 dicht verschließt.

Zweckmäßig weist das Motorgehäuse 17 einen Kühlmitteleinlass 29 und einen Kühlmittelauslass 30 auf und enthält einen Innenraum 31, der mit dem Kühlmitteleinlass 29 und mit dem Kühlmittelauslass 30 fluidisch verbunden ist. Ferner ist der Innenraum 31 mit dem Rotorraum 18 fluidisch verbunden. Im gezeigten Beispiel weist das Motorgehäuse 17 außerdem eine Wellendichtung 32 auf, durch welche die Abtriebswelle 14 hindurchgeführt und aus dem Motorgehäuse 17 herausgeführt ist. Im Beispiel ist die Wellendichtung 32 innenraumseitig, also vom Innenraum 31 her mit dem Kühlmittel 19 beaufschlagt, um die Wellendichtung 32 zu kühlen. Das Motorgehäuse 17 besitzt hierzu einen Dichtungsbereich 33, der in Figur 1 durch einen mit unterbrochener Linie gezeichneten Rahmen angedeutet ist. In diesem Dichtungsbereich 33 ist die Wellendichtung 32 angeordnet. Der Dichtungsbereich 33 ist im Gehäuse 17 bzw. im Innenraum 31 so angeordnet und ausgestaltet, dass er sowohl eine radiale Kühlung als auch eine axiale Kühlung der Wellendichtung 32 ermöglicht. Insbesondere ist eine radiale Einfassung 34 der Wellendichtung 32 mit Kühlmittel 19 beaufschlagt. Außerdem ist ein Axialanschlag 35 für die Wellendichtung 32 mit Kühlmittel 19 beaufschlagt.

Im gezeigten Beispiel ist die Wellendichtung 32 als Berührungsdichtung dargestellt. Es ist klar, dass bei einer anderen Ausführungsform auch eine Ausgestaltung als Labyrinthdichtung oder eine kombiniertes Dichtungssystem in Betracht kommt.

Der Rotor 13 und die Abtriebswelle 14 sind zweckmäßig am Motorgehäuse 17 drehbar gelagert. Ein entsprechendes Drehlager 36 kann beispielsweise nahe am Rotor 13 positioniert sein.

Die Abtriebswelle 14 des Elektromotors 9 kann zum Antreiben der Pumpe 8 mit einer Antriebswelle 37 der Pumpe 8 antriebsverbunden sein. Bevorzugt ist jedoch eine Ausführungsform, bei welcher die Abtriebswelle 14 und die Antriebswelle 37 eine integrale Einheit bilden.

Zur Versorgung des Elektromotors 9 mit dem Kühlmittel 19 kann ein Kühlmittelpfad 38 vorgesehen sein, der hier durch Pfeile am Kühlmitteleinlass 29 und am Kühlmittelauslass 30 angedeutet ist. Der Kühlmittelpfad 38 führt das Kühlmittel 19 dem Elektromotor 9 zu und führt es auch wieder vom Elektromotor 9 ab. Der Kühlmittelpfad 38 kann beispielsweise in den Kühlkreis 10 der Brennkraftmaschine 1 eingebunden sein. Beispielsweise kann der Kühlkreis 10 hierzu einen Kühlkreisabschnitt 39 aufweisen, der bei 40 vom Kühlkreis 10 abgezweigt ist und bei 41 in den Kühlkreis 10 rückgeführt ist. Die hier angedeuteten Positionen für die Entnahme 40 und die Rückführung 41, die sich hier im vom Motorblock 3 kommenden warmen Rücklauf stromauf des Kühlers 11 befinden, können natürlich auch an anderer Stelle innerhalb des Kühlkreises 10 vorgesehen sein, insbesondere im zum Motorblock 3 gehenden kalten Vorlauf stromab des Kühlers 11.

Bei einer alternativen Ausführungsform kann anstelle des Kühlmittels des Kühlkreises 10 auch das mit Hilfe der Pumpe 8 in einem durch Pfeile angedeuteten Hydraulikpfad 42 bzw. Ölpfad 42 geführte Öl als Kühlmittel 19 zum Kühlen des Elektromotors 9 verwendet werden. Hierzu kann stromab der Pumpe 8 ein durch Pfeile angedeuteter Teilstrom 43 des von der Pumpe 8 geförderten Öls über eine Entnahmestelle 44 stromab der Pumpe 8, also druckseitig, zum Beispiel am Vorlauf 4 vom Ölpfad 42 abgezweigt und dem Kühlmitteleinlass 29 zugeführt werden. Zwischen Kühlmitteleinlass 29 und Entnahmestelle 44 kann dabei zweckmäßig eine Wärmesenke 45 angeordnet sein. Im Beispiel ist die Wärmesenke 45 als Wärmeübertrager ausgestaltet, der mit dem Kühlkreis 10 wärmeübertragend gekoppelt ist. Beispielsweise kann hierzu ein Kühlkreisabschnitt 46 bei 47 vom Kühlkreis 10 abgezweigt und bei 48 in den Kühlkreis 10 rückgeführt werden. Die hier angedeuteten Positionen für die Entnahme 47 und die Rückführung 48, die sich hier im vom Motorblock 3 kommenden warmen Rücklauf stromauf des Kühlers 11 befinden, können natürlich auch an anderer Stelle innerhalb des Kühlkreises 10 vorgesehen sein, insbesondere im zum Motorblock 3 gehenden kalten Vorlauf stromab des Kühlers 11.

Denkbar sind auch andere Maßnahmen zur Realisierung der Wärmesenke 45. Beispielsweise kann die Wärmesenke 45 durch einen Kühler gebildet sein, der einem kühlenden Luftstrom ausgesetzt ist.

Während eine Zulaufleitung 49 die Entnahmestelle 44 mit dem Kühlmitteleinlass 29 verbindet, ist eine Rücklaufleitung 50 an den Kühlmittelauslass 30 angeschlossen. Die Rücklaufleitung 50 kann beispielsweise zum Reservoir 6, also hier zur Ölwanne 6 führen. Alternativ ist es ebenso möglich, die Rücklaufleitung 50 über eine Einleitstelle 51 stromauf der Pumpe 8, also saugseitig an den Ölpfad 42, hier an die Vorlaufleitung 4 anzuschließen.

Bei der hier gezeigten Ausführungsform befindet sich die Pumpe 8 außerhalb des Rotorraums 18. Außerdem ist die Pumpe 8 außerhalb des Innenraums 31 des Motorgehäuses 17 angeordnet. Ein Gehäuse 52 der Pumpe 8 kann jedoch abweichend zur Darstellung der Figur 1 unmittelbar an das Motorgehäuse 17 angebaut sein. Ebenso ist es möglich, die Fördereinrichtung 7 mit einem gemeinsamen Gehäuse für die Pumpe 8 und den Elektromotor 9 auszustatten, so dass dann ein Motorgehäuseabschnitt 17 und ein Pumpengehäuseabschnitt 52 integral ineinander übergehen.

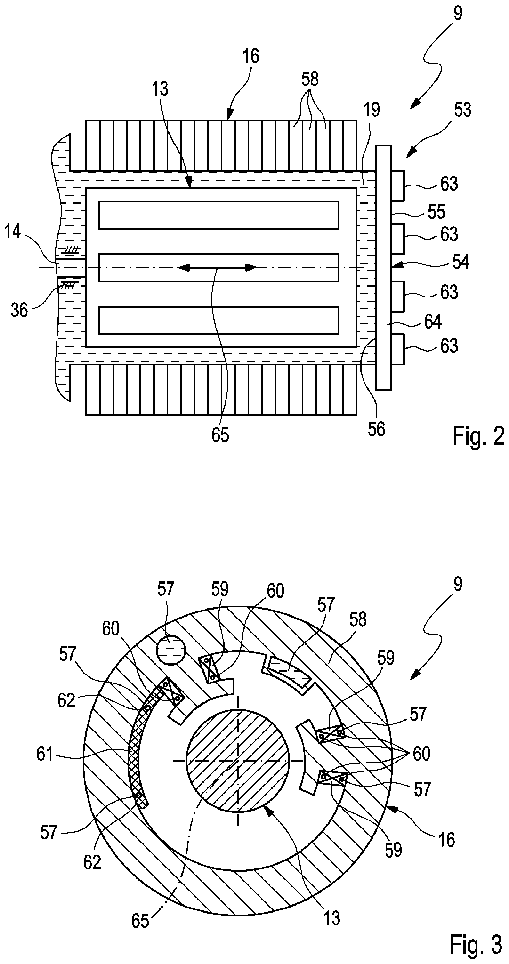

Während Fig. 1 weitgehend auf eine interne bzw. rotorseitige Kühlung des Elektromotrs 9 zeigt, geht aus den Fig. 2 und 3 eine externe bzw. statorseitige Kühlung des Elektromotors 9 hervor. Beispielsweise kann der Elektromotor 9 in üblicher Weise eine Leistungselektronik 53 zur Versorgung des Stators 16 mit elektrischer Energie aufweisen. Diese ist bezüglich des Rotors 13 axial im Motorgehäuse 17 angeordnet ist, und zwar zweckmäßig derart, dass mit dem Kühlmittel 19 Wärme von der Leistungselektronik 53 abführbar ist. Gemäß Fig. 2 kann hierzu eine Platine 54 der Leistungselektronik 53, die auf einer ersten Seite 55 elektrische Komponenten 63 der Leistungselektronik 53 trägt, an einer der ersten Seite 55 gegenüberliegenden zweiten Seite 56 direkt mit dem Kühlmittel 19 beaufschlagt ist. Alternativ oder zusätzlich dazu kann die Platine 54 der Leistungselektronik 53 hohl ausgestaltet sein und einen vom Kühlmittel 19 durchströmten Hohlraum 64 aufweisen.

Gemäß Fig. 3 kann zusätzlich oder alternativ zur Kühlung des Stators 16 vorgesehen sein, dass der Stator 16 wenigstens einen Kühlkanal 57 aufweist, durch den das Kühlmittel 19 strömt. Im Beispiel der Fig. 3 sind mehrere Varianten gezeigt, wie ein derartiger Kühlkanal 57 im bzw. am Stator 16 angeordnet sein könnte, wobei die einzelnen Varianten einzeln für sich und unabhängig voneinander ebenso realisierbar sind wie alle gemeinsam oder in beliebiger Kombination miteinander. Beispielsweise kann der Stator 16 gemäß Fig. 2 aus einer Vielzahl, vorzugsweise in der durch einen Doppelpfeil angedeuteten Axialrichtung 65 des Rotors 13, aufeinandergestapelter Statorbleche 58 aufgebaut sein, in denen gemäß Fig. 3 wenigstens ein solcher Kühlkanal 57 ausgebildet ist. Weiterhin kann der Stator 16 in üblicher Weise wenigstens eine Statorwicklung 59 aufweisen. In wenigstens eine solche Statorwicklung 59 kann wenigstens ein Rohr 60 zur Ausbildung eines solchen Kühlkanals 57 eingebunden sein. Ebenso kann der Stator 16 wenigstens eine elektrische Isolierung 61 zum Rotorraum 18 aufweisen, wobei in der Isolierung 61 wenigstens ein Rohr 62 zur Ausbildung eines solchen Kühlkanals 57 angeordnet ist.

## Patentansprüche

1. Flüssigkeitsfördereinrichtung für ein Kraftfahrzeug, insbesondere für eine Brennkraftmaschine (1),
- mit einer Pumpe (8) zum Fördern eines Hydraulikmediums,
- mit einem Elektromotor (9) zum Antreiben der Pumpe (8),
- wobei ein Rotor (13) des Elektromotors (9) in einem Rotorraum (18) drehbar gelagert ist, der von einem Kühlmittel (19) durchströmbar ist,
- wobei der Rotorraum (18) durch ein Spaltrohr (20) von einem Stator (16) des Elektromotors (9) fluidisch dicht getrennt ist,
- wobei ein Motorgehäuse (17) einen Kühlmitteleinlass (29) und einen Kühlmittelauslass (30) aufweist,
- wobei ein mit dem Kühlmitteleinlass (29) und dem Kühlmittelauslass (30) fluidisch verbundener Innenraum (31) des Motorgehäuses (17) mit dem Rotorraum (18) fluidisch verbunden ist,
- wobei eine Leistungselektronik (53) zur Versorgung des Stators (16) mit elektrischer Energie so angeordnet ist, dass mit dem Kühlmittel (19) Wärme von der Leistungselektronik (53) abführbar ist,
**dadurch gekennzeichnet,**
- **dass** eine Platine (54) der Leistungselektronik (53), die auf einer ersten Seite (55) elektrische Komponenten der Leistungselektronik (53) trägt, an einer der ersten Seite (55) gegenüberliegenden zweiten Seite (56) direkt mit dem Kühlmittel (19) beaufschlagt ist, oder
- **dass** eine Platine (54) der Leistungselektronik (53), die elektrische Komponenten der Leistungselektronik (53) trägt, hohl ausgestaltet ist und vom Kühlmittel (19) durchströmt ist.

2. Flüssigkeitsfördereinrichtung nach Anspruch 1,
**dadurch gekennzeichnet,**
- **dass** das Kühlmittel (19) vom Hydraulikmedium fluidisch getrennt ist, und/oder
- **dass** das Kühlmittel (19) und das Hydraulikmedium verschiedene Flüssigkeiten sind.

3. Flüssigkeitsfördereinrichtung nach Anspruch 1,
**dadurch gekennzeichnet,**
**dass** ein durch die Pumpe (8) geführter Hydraulikpfad (42) stromab der Pumpe (8) eine Entnahmestelle (44) für einen Teilstrom (43) des Hydraulikmediums aufweist, der als Kühlmittel (19) für den Elektromotor (9) verwendet wird, wobei zwischen der Entnahmestelle (44) und dem Kühlmitteleinlass (29) insbesondere eine Wärmesenke (45) angeordnet sein kann.

4. Flüssigkeitsfördereinrichtung nach einem der Ansprüche 1 bis 3,
**dadurch gekennzeichnet,**
**dass** das Spaltrohr (20) im Bereich des Rotors (13) hohl ausgestaltet und vom Kühlmittel (19) durchströmbar ist.

5. Flüssigkeitsfördereinrichtung nach einem der Ansprüche 1 bis 4,
**dadurch gekennzeichnet,**
**dass** der Rotor (13) als Nassläufer ausgestaltet ist.

6. Flüssigkeitsfördereinrichtung nach einem der Ansprüche 1 bis 5,
**dadurch gekennzeichnet,**
**dass** das Spaltrohr (20) an einer Stirnseite mit einem Boden (22) verschlossen ist, der insbesondere hohl ausgestaltet und vom Kühlmittel (19) durchströmbar sein kann.

7. Flüssigkeitsfördereinrichtung nach einem der Ansprüche 1 bis 6,
**dadurch gekennzeichnet,**
- **dass** das Motorgehäuse (17) eine Wellendichtung (32) aufweist, durch die hindurch eine mit dem Rotor (13) antriebsverbundene Abtriebswelle (14) des Elektromotors (9) aus dem Motorgehäuse (17) herausgeführt ist,
- **dass** die Wellendichtung (32) innenraumseitig vom Kühlmittel (19) beaufschlagt ist, wobei insbesondere vorgesehen sein kann, dass das Motorgehäuse (17) einen Dichtungsbereich (33) aufweist, in dem die Wellendichtung (32) angeordnet ist und der eine radiale und axiale Kühlung der Wellendichtung (32) ermöglicht.

8. Flüssigkeitsfördereinrichtung nach einem der Ansprüche 1 bis 7,
**dadurch gekennzeichnet,**
**dass** der Rotor (13) und/oder die Abtriebswelle (14) am Motorgehäuse (17) drehbar gelagert ist/sind.

9. Flüssigkeitsfördereinrichtung nach einem der Ansprüche 1 bis 8,
**dadurch gekennzeichnet,**
**dass** eine Abtriebswelle (14) des Elektromotors (9) mit einer Antriebswelle (37) der Pumpe (8) antriebsverbunden ist oder mit dieser eine integrale Einheit bildet.

10. Flüssigkeitsfördereinrichtung nach einem der Ansprüche 1 bis 9,
**dadurch gekennzeichnet,**
**dass** ein das Kühlmittel (19) dem Elektromotor (9) zuführender und das Kühlmittel (19) vom Elektromotor (9) abführende Kühlmittelpfad (38) in einen Kühlkreis (10) der Brennkraftmaschine (1) eingebunden ist, der zum Kühlen eines Motorblocks (3) der Brennkraftmaschine (1) vorgesehen ist.

11. Flüssigkeitsfördereinrichtung nach einem der Ansprüche 1 bis 10,
**dadurch gekennzeichnet,**
**dass** die Pumpe (8) außerhalb des Rotorraums (18) und/oder des Motorgehäuseinnenraums (31) angeordnet ist.

12. Flüssigkeitsfördereinrichtung nach einem der Ansprüche 1 bis 11,
**dadurch gekennzeichnet,**
**dass** der Stator (16) wenigstens einen Kühlkanal (57) aufweist, durch den das Kühlmittel (19) strömt.

13. Flüssigkeitsfördereinrichtung nach Anspruch 12,
**dadurch gekennzeichnet,**
**dass** der Stator (16) aus einer Vielzahl, vorzugsweise in der Axialrichtung des Rotors (13), aufeinandergestapelter Statorbleche (58) aufgebaut ist, in denen wenigstens ein solcher Kühlkanal (57) ausgebildet ist.

14. Flüssigkeitsfördereinrichtung nach Anspruch 12 oder 13,
**dadurch gekennzeichnet,**
**dass** der Stator (16) wenigstens eine Statorwicklung (59) aufweist, in die wenigstens ein Rohr (60) zur Ausbildung eines solchen Kühlkanals (57) eingebunden ist.

15. Flüssigkeitsfördereinrichtung nach einem der Ansprüche 12 bis 14,
**dadurch gekennzeichnet,**
**dass** der Stator (16) zum Rotorraum (18) hin wenigstens eine elektrische Isolierung (61) aufweist, wobei in der Isolierung (61) wenigstens ein Rohr (62) zur Ausbildung eines solchen Kühlkanals (57) angeordnet ist.

## Claims

1. Liquid delivery device for a motor vehicle, in particular for an internal combustion engine (1),
- with a pump (8) for delivering a hydraulic medium,
- with an electric motor (9) for driving the pump (8),
- wherein a rotor (13) of the electric motor (9) is rotatably mounted in a rotor chamber (18) through which a coolant (19) can flow,
- wherein the rotor chamber (18) is separated in a fluid-tight manner from a stator (16) of the electric motor (9) by a can (20),
- wherein a motor housing (17) comprises a coolant inlet (29) and a coolant outlet (30),
- wherein an inner space (31) of the motor housing (17) that is fluidly connected to the coolant inlet (29) and the coolant outlet (30) is fluidly connected to the rotor chamber (18),
- wherein power electronics (53) for supplying electric energy to the stator (16) are arranged such that heat can be extracted from the power electronics (53) by means of the coolant (19),
**characterised in that**
- a circuit board (54) of the power electronics (53) carrying, on a first side (55), electrical components of the power electronics (53) is directly charged with the coolant (19) on a second side (56) opposite the first side (55), or
- that a circuit board (54) of the power electronics (53) carrying electrical components of the power electronics (53) is hollow with the coolant (19) flowing through it.

2. Liquid delivery device according to claim 1,
**characterised in that**
- the coolant (19) is fluidly separated from the hydraulic medium, and/or
- the coolant (19) and the hydraulic medium are different liquids.

3. Liquid delivery device according to claim 1,
**characterised in that**
a hydraulic path (42) led through the pump (8) comprises a tapping point (44) downstream of the pump (8) for a partial flow (43) of the hydraulic medium which is used as a coolant (19) for the electric motor (9), wherein in particular a heat sink (45) can be arranged between the tapping point (44) and the coolant inlet (29).

4. Liquid delivery device according to any of claims 1 to 3,
**characterised in that**
the can (20) in the area of the rotor (13) is hollow and the coolant (19) can flow through it.

5. Liquid delivery device according to any of claims 1 to 4,
**characterised in that**
the rotor (13) is a wet runner.

6. Liquid delivery device according to any of claims 1 to 5,
**characterised in that**
the can (20) is closed at a front end with a bottom (22) which is in particular hollow and through which the coolant (19) can flow.

7. Liquid delivery device according to any of claims 1 to 6,
**characterised in that**
- the motor housing (17) comprises a shaft seal (32) through which a drive shaft (14) of the electric motor (9) that is operationally coupled to the rotor (13) is led out of the motor housing (17),
- the shaft seal (32) is charged with the coolant (19) on the inner side, wherein it can in particular be provided that the motor housing (17) comprises a sealing area (33) in which the shaft seal (32) is arranged and which enables a radial and axial cooling of the shaft seal (32).

8. Liquid delivery device according to any of claims 1 to 7,
**characterised in that**
the rotor (13) and/or the drive shaft (14) is/are rotatably mounted on the motor housing (17).

9. Liquid delivery device according to any of claims 1 to 8,
**characterised in that**
a drive shaft (14) of the electric motor (9) is operationally coupled to a drive shaft (37) of the pump (8) or forms an integral unit with the pump.

10. Liquid delivery device according to any of claims 1 to 9,
**characterised in that**
a coolant path (38) delivering the coolant (19) to the electric motor (9) and extracting the coolant (19) from the electric motor (9) is integrated in a cooling circuit (10) of the internal combustion engine (1) which is provided for cooling an engine block (3) of the internal combustion engine (1).

11. Liquid delivery device according to any of claims 1 to 10,
**characterised in that**
the pump (8) is arranged outside the rotor chamber (18) and/or the motor housing interior (31).

12. Liquid delivery device according to any of claims 1 to 11,
**characterised in that**
the stator (16) comprises at least one cooling duct (57) through which the coolant (19) flows.

13. Liquid delivery device according to claim 12,
**characterised in that**
the stator (16) consists of a plurality of stacked stator sheets (58), in particular in the axial direction of the rotor (13), in which at least one such cooling duct (57) is formed.

14. Liquid delivery device according to claim 12 or 13,
**characterised in that**
the stator (16) comprises at least one stator winding (59) in which at least one tube (60) for forming such a cooling duct (57) is integrated.

15. Liquid delivery device according to any of claims 12 to 14,
**characterised in that**
the stator (16) comprises at least one electrical insulation (61) to the rotor chamber (18), wherein at least one tube (62) for forming such a cooling duct (57) is arranged in the insulation (61).

## Revendications

1. Dispositif de transport de liquide pour un véhicule automobile, en particulier pour un moteur à combustion interne (1),
- avec une pompe (8) destinée à transporter un fluide hydraulique,
- avec un moteur électrique (9) destiné à entraîner la pompe (8),
- dans lequel un rotor (13) du moteur électrique (9) est logé de manière rotative dans un espace de rotor (18) qui peut être traversé par un fluide de refroidissement (19),
- dans lequel l'espace de rotor (18) est séparé, de manière étanche pour les fluides, d'un stator (16) du moteur électrique (9) par une chemise (20),
- dans lequel un carter de moteur (17) comporte une entrée de fluide de refroidissement (29) et une sortie de fluide de refroidissement (30),
- dans lequel un espace intérieur (31), relié pour les fluides à l'entrée de fluide de refroidissement (29) et à la sortie de fluide de refroidissement (30), du carter de moteur (17) est relié pour les fluides à l'espace de rotor (18),
- dans lequel une électronique de puissance (53) destinée à l'alimentation du stator (16) en énergie électrique est agencée de telle sorte que de la chaleur peut être évacuée de l'électronique de puissance (53) avec le fluide de refroidissement (19), **caractérisé en ce que**
- une platine (54) de l'électronique de puissance (53), qui supporte sur un premier côté (55) des composants électriques de l'électronique de puissance (53), est soumise directement au fluide de refroidissement (19) sur un deuxième côté (56) à l'opposé du premier côté (55), ou
- une platine (54) de l'électronique de puissance (53), qui supporte des composants électriques de l'électronique de puissance (53), est conçue creuse et traversée par le fluide de refroidissement (19).

2. Dispositif de transport de fluide selon la revendication 1, **caractérisé en ce que**
- le fluide de refroidissement (19) est séparé fluidiquement du fluide hydraulique, et/ou
- le fluide de refroidissement (19) et le fluide hydraulique sont des liquides différents.

3. Dispositif de transport de liquide selon la revendication 1, **caractérisé en ce qu'**une voie hydraulique (42) passant par la pompe (8) comporte en aval de la pompe (8) un point de prélèvement (44) pour un flux partiel (43) du fluide hydraulique qui est utilisé comme fluide de refroidissement (19) pour le moteur électrique (9), un puits thermique (45) pouvant en particulier être agencé entre le point de prélèvement (44) et l'entrée de fluide de refroidissement (29).

4. Dispositif de transport de liquide selon l'une quelconque des revendications 1 à 3, **caractérisé en ce que** la chemise (20) est conçue creuse dans la zone du rotor (13) et peut être traversée par le fluide de refroidissement (19).

5. Dispositif de transport de liquide selon l'une quelconque des revendications 1 à 4, **caractérisé en ce que** le rotor (13) est conçu comme un rotor noyé.

6. Dispositif de transport de liquide selon l'une quelconque des revendications 1 à 5, **caractérisé en ce que** la chemise (20) est fermée d'un côté frontal par un fond (22) qui peut être conçu en particulier creux et traversé par le fluide de refroidissement (19).

7. Dispositif de transport de liquide selon l'une quelconque des revendications 1 à 6, **caractérisé en ce que**
- le carter de moteur (17) comporte un joint pour arbre (32) à travers lequel un arbre de sortie (14), relié pour l'entraînement au rotor (13), du moteur électrique (9) est guidé hors du carter de moteur (17),
- le joint pour arbre (32) est soumis au fluide de refroidissement (19) du côté de l'espace intérieur, dans lequel il peut en particulier être prévu que le carter de moteur (17) comporte une zone d'étanchéité (33) dans laquelle le joint pour arbre (32) est agencé et qui permet un refroidissement radial et axial du joint pour arbre (32).

8. Dispositif de transport de liquide selon l'une quelconque des revendications 1 à 7, **caractérisé en ce que** le rotor (13) et/ou l'arbre de sortie (14) sont logés rotatifs au niveau du carter de moteur (17).

9. Dispositif de transport de liquide selon l'une quelconque des revendications 1 à 8, **caractérisé en ce qu'**un arbre de sortie (14) du moteur électrique (9) est relié pour l'entraînement à un arbre moteur (37) de la pompe (8) ou forme une unité avec celui-ci.

10. Dispositif de transport de liquide selon l'une quelconque des revendications 1 à 9, **caractérisé en ce qu'**une voie de fluide de refroidissement (38) amenant le fluide de refroidissement (19) au moteur électrique (9) et évacuant le fluide de refroidissement (19) du moteur électrique (9) est incluse dans un circuit de refroidissement (10) du moteur à combustion interne (1) qui est prévu pour le refroidissement d'un bloc-moteur (3) du moteur à combustion interne (1).

11. Dispositif de transport de liquide selon l'une quelconque des revendications 1 à 10, **caractérisé en ce que** la pompe (8) est agencée à l'extérieur de l'espace de rotor (18) et/ou de l'espace intérieur de carter de moteur (31).

12. Dispositif de transport de liquide selon l'une quelconque des revendications 1 à 11, **caractérisé en ce que** le stator (16) comporte au moins un canal de refroidissement (57) par lequel s'écoule le fluide de refroidissement (19).

13. Dispositif de transport de liquide selon la revendication 12, **caractérisé en ce que** le stator (16) est constitué d'une multiplicité de tôles statoriques (58) empilées les unes sur les autres, de préférence dans la direction axiale du rotor (13), dans lesquelles au moins un canal de refroidissement (57) de ce type est réalisé.

14. Dispositif de transport de liquide selon la revendication 12 ou 13, **caractérisé en ce que** le stator (16) comporte au moins un enroulement statorique (59) dans lequel au moins un tube (60) est inclus pour former un canal de refroidissement (57) de ce type.

15. Dispositif de transport de liquide selon l'une quelconque des revendications 12 à 14, **caractérisé en ce que** le stator (16) comporte par rapport à l'espace de rotor (18) au moins une isolation électrique (61), au moins un tube (62) destiné à former un canal de refroidissement (57) de ce type étant agencé dans l'isolation (61).
